# EUROPEAN PATENT APPLICATION

(11) **EP 4 683 383 A1**
(43) Date of publication of application: **21.01.2026**
(21) Application number: 23926747.9
(22) Date of filing: 14.03.2023
(51) Int. Cl.: H04W 36/00

(54) **SUCCESSFUL HANDOVER REPORT (SHR) GENERATION METHOD, AND APPARATUS, DEVICE AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Gunzelmann, Rainer
(86) International application number: PCT/CN2023/081475
(87) International publication number: WO 2024/187389

(57) **Abstract**

Provided in the present disclosure are an SHR generation method, and an apparatus, a device and a storage medium. The method comprises: when a terminal successfully completes a handover between different radio access technology (RAT) cells, in response to detecting an SHR trigger event, the terminal generating an SHR. By means of the method disclosed in the present disclosure, an SHR can be successfully generated and reported during a handover between different RAT cells.

## Description

### TECHNICAL FIELD

The disclosure relates to the field of communication technologies, and in particular to a method and an apparatus for generating a successful handover report (SHR), a device, and a storage medium.

### BACKGROUND

In a communication system, when a terminal completes a cell handover, the terminal generally needs to record a successful handover report (SHR) and report the SHR to a network device.

### SUMMARY

The disclosure provides a method and an apparatus for generating a successful handover report (SHR), a device, and a storage medium.

In a first aspect, embodiments of the disclosure provide a method for generating an SHR. The method includes: generating, by a terminal, the SHR in response to detecting an SHR trigger event, in a case that the terminal successfully completes a handover between cells of different radio access types (RATs).

In a second aspect, embodiments of the disclosure provide a method for generating an SHR. The method includes: receiving, by a network device, an SHR reported by a terminal, in which the SHR is information generated by the terminal in response to detecting an SHR trigger event, in a case that the terminal successfully completes a handover between cells of different RATs.

In a third aspect, embodiments of the disclosure provide a communication apparatus. The communication apparatus includes: a processing module, configured to generate an SHR in response to detecting an SHR trigger event, in a case that a terminal successfully completes a handover between cells of different RATs.

In a fourth aspect, embodiments of the disclosure provide a communication apparatus. The communication apparatus includes: a transceiver module, configured to receive an SHR reported by a terminal, in which the SHR is information generated by the terminal in response to detecting an SHR trigger event, in a case that the terminal successfully completes a handover between cells of different RATs.

In a fifth aspect, embodiments of the disclosure provide a communication device. The communication device includes a processor. When the processor calls a computer program in a memory, the method according to the first aspect or the method according to the second aspect is performed.

In a sixth aspect, embodiments of the disclosure provide a communication device. The communication device includes a processor and a memory. The memory is stored with a computer program; and the processor is configured to execute the computer program stored in the memory, so that the communication device performs the method according to the first aspect or the method according to the second aspect.

In a seventh aspect, embodiments of the disclosure provide a communication device. The communication device includes a processor and an interface circuit. The interface circuit is configured to receive code instructions and transmit the code instructions to the processor; and the processor is configured to run the code instructions so that the method according to the first aspect or the method according to the second aspect is performed.

In an eighth aspect, embodiments of the disclosure provide a communication system. The system includes the communication apparatus according to the third aspect and the communication apparatus according to the fourth aspect, or the system includes the communication device according to the fifth aspect, or the system includes the communication device according to the sixth aspect, or the system includes the communication device according to the seventh aspect.

In a ninth aspect, embodiments of the disclosure provide a computer-readable storage medium. The computer-readable storage medium is configured to store instructions used by the network function, which when executed, enable the network function to perform the method according to the first aspect or the method according to the second aspect.

In a tenth aspect, embodiments of the disclosure provide a computer program product including a computer program. When the computer program is running on a computer, the computer is caused to perform the method according to the first aspect or the method according to the second aspect.

In an eleventh aspect, embodiments of the disclosure provide a chip system. The chip system includes at least one processor and an interface, and is configured to support the network function to perform functions involved in the first aspect or involved in the second aspect, for example, to determine or process at least one of data and information involved in the above methods. In a possible design, the chip system further includes a memory. The memory is configured to save a necessary computer program and data for the network function. The chip system may be constituted by a chip, or may include a chip and other discrete devices.

In a twelfth aspect, embodiments of the disclosure provide a computer program. When the computer program is running on a computer, the computer is caused to perform the method according to the first aspect or the method according to the second aspect.

### BRIEF DESCRIPTION OF THE DRAWINGS

The above-mentioned and/or additional aspects and advantages of the disclosure will become apparent and readily appreciated from the following description of embodiments, taken in combination with the accompanying figures.
FIG. 1 is a diagram illustrating an architecture of a communication system according to an embodiment of the disclosure.
FIG. 2 is a flow chart illustrating a method for generating a successful handover report (SHR) according to another embodiment of the disclosure.
FIG. 3a-FIG. 3b are flow charts respectively illustrating a method for generating an SHR according to another embodiment of the disclosure.
FIG. 4a-FIG. 4b are flow charts respectively illustrating a method for generating an SHR according to another embodiment of the disclosure.
FIG. 5 is a flow chart illustrating a method for generating an SHR according to another embodiment of the disclosure.
FIG. 6 is a flow chart illustrating a method for generating an SHR according to another embodiment of the disclosure.
FIG. 7a-FIG. 7b are flow charts respectively illustrating a method for generating an SHR according to another embodiment of the disclosure.
FIG. 8 is a flow chart illustrating a method for generating an SHR according to another embodiment of the disclosure.
FIG. 9 is a flow chart illustrating a method for generating an SHR according to another embodiment of the disclosure.
FIG. 10a is a flow chart illustrating an interaction of a method for generating an SHR according to another embodiment of the disclosure.
FIG. 10b is a block diagram illustrating a communication apparatus according to an embodiment of the disclosure.
FIG. 11 is a block diagram illustrating a communication apparatus according to an embodiment of the disclosure.
FIG. 12 is a block diagram illustrating a communication device according to an embodiment of the disclosure.
FIG. 13 is a block diagram illustrating a chip according to an embodiment of the disclosure.

### DETAILED DESCRIPTION

Reference will now be made in detail to the example embodiments, examples of which are illustrated in the accompanying figures. When the following description refers to the accompanying figures, the same numerals in different figures refer to the same or similar elements unless otherwise indicated. The implementations described in the following example embodiments do not represent all implementations consistent with the embodiments of the disclosure. Rather, they are merely examples of devices and methods consistent with some aspects of the embodiments of the disclosure as recited in the appended claims.

Terms used in the embodiments of the disclosure are for the purpose of describing specific embodiments only, and are not intended to limit the embodiments of the disclosure. As used in the examples of this disclosure and the appended claims, the singular forms "a/an" and "the" are also intended to include the plural forms unless the context clearly dictates otherwise. It should also be understood that the term "and/or" as used herein refers to and includes any and all possible combinations of one or more of the associated listed items.

It should be understood that although the embodiments of the disclosure may use the terms first, second, third, etc. to describe various information, the information should not be limited to these terms. These terms are only used to distinguish information of the same type from one another. For example, without departing from the scope of the embodiments of the disclosure, first information may also be called second information, and similarly, second information may also be called first information. Depending on the context, the word "if" and "in case" as used here may be interpreted as "in a case that" or "when" or "in response to determining that".

The embodiments of the disclosure are described in detail below, and examples of the embodiments are illustrated in the accompanying figures, in which the same or similar symbols from beginning to end indicate the same or similar elements. The embodiments described below by reference to the accompanying figures are examples and are intended to be used to explain the disclosure and are not to be construed as a limitation of the disclosure.

For ease of understanding, terms related to the disclosure are first introduced.

### 1. Long Term Evolution (LTE)

The LTE is a long-term evolution of a universal mobile telecommunications system (UMTS) technical standard formulated by the 3rd generation partnership project (3GPP) organization. The LTE system introduces key technologies such as orthogonal frequency division multiplexing (OFDM) and multi-input and multi-output (MIMO), which significantly increase spectrum efficiency and data transmission rates (theoretical maximum downlink transmission rate is 201 Mbps for 20MHz bandwidth with 2X2 MIMO under 64QAM, which is about 150 Mbps after removing signaling overhead; however, based on practical network deployment and terminal capability limitations, the downlink peak rate is generally considered to be 100 Mbps, and the uplink peak rate is 50 Mbps). The LTE system also supports a plurality of bandwidth allocations: 1.4MHz, 3MHz, 5MHz, 10MHz, 15MHz, 20MHz, etc.

### 2. New Radio (NR)

The NR is a new standard for data communication between a terminal and a base station. The communication between the terminal and the base station is wireless communication, and the medium is radio waves propagating through the air. The NR is a "new interface for wirelessly transmitting data through the air." The overall design of the NR air interface protocol layers is based on the LTE, with enhancements and optimizations. On a user plane, a service data adaptation protocol layer is added above a packet data convergence protocol layer; further, functionalities of the packet data convergence protocol layer and the radio link control sublayer are optimized to reduce latency and enhance reliability.

The main enhancements and evolutions of the NR compared to the LTE include: the NR supports a higher frequency range (supporting a broader millimeter-wave spectrum); the NR supports a more flexible frame structure; NR supports flexible parameter sets; and the NR provides enhancements for low air interface latency.

Optionally, in a communication system, there are cells of different radio access types (RATs). The cells of different RATs may include at least one of: an NR cell or an LTE cell. Optionally, a terminal typically performs a handover between different cells. For example, the terminal may perform the handover between different cells of the same RAT, such as the handover from an NR cell to another NR cell; or, the terminal may perform the handover between cells of different RATs, such as the handover from an NR cell to the LTE cell, or from the LTE cell to the NR cell. Optionally, when the terminal performs a cell handover, it generally needs to record and report a successful handover report (SHR). However, currently, the recording and reporting of the SHR is only supported for a scenario where "the terminal performs a handover between cells of the same RAT"; for a scenario where "the terminal performs a handover between cells of different RATs", a method for recording and reporting the SHR does not exist.

Based on the above, the disclosure provides a method for generating an SHR.

In order to better understand the method for generating an SHR in embodiments of the disclosure, a communication system to which embodiments of the disclosure are applicable is described below.

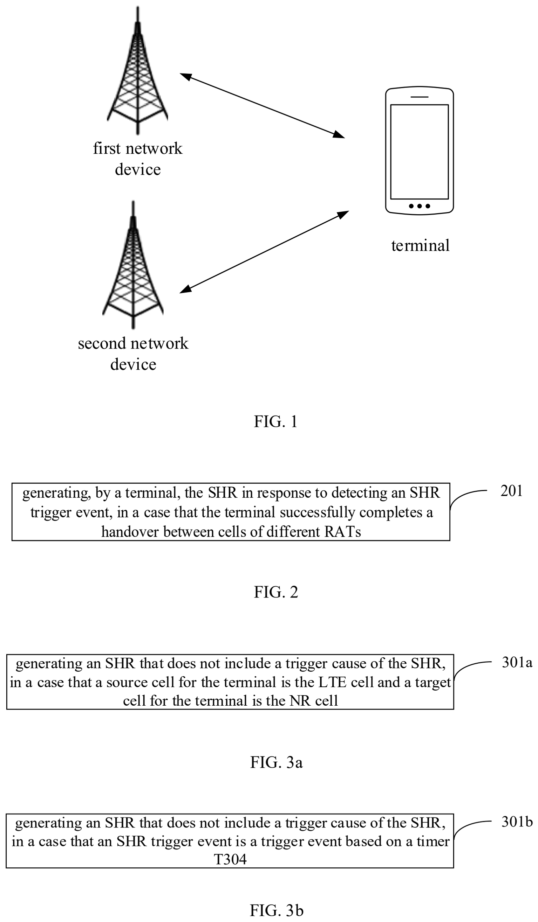

FIG. 1 is a diagram illustrating an architecture of a communication system according to an embodiment of the disclosure. The communication system may include, but is not limited to, two network devices and one terminal. The number and forms of the devices illustrated in FIG. 1 are only for example and do not constitute a limitation to embodiments of the disclosure, and two or more network devices and one or more terminals may be included in practical applications. The communication system as illustrated in FIG. 1 includes two network devices and one terminal for example. The two network devices may be a first network device and a second network device. The first network device may be a network device corresponding to a source cell before the terminal performs a cell handover (that is, a source network device). The second network device may be a network device corresponding to a target cell after the terminal performs the cell handover (that is, a target network device).

It should to be noted that the technical solution in embodiments of the disclosure is applicable to various communication systems, such as an LTE system, a 5th generation (5G) mobile communication system, a 5G NR system or other future new mobile communication system.

The network device in embodiments of the disclosure is an entity, at a network side, for transmitting or receiving a signal. For example, the network device may be an evolved NodeB (eNB), a transmission reception point (TRP), a radio remote head (RRH), a next generation NodeB (gNB) in a NR system, a base station in other future mobile communication systems, or an access node in a wireless fidelity (WiFi) system. A specific technology and a specific device form adopted by the network device are not limited in embodiments of the disclosure. The network device according to embodiments of the disclosure may consist of a central unit (CU) and a distributed unit (DU). The CU may also be referred to as a control unit. The protocol layers of a base station such as a base station may be split by using a structure of the CU-DU, so that the functions for a part of the protocol layers are placed in the CU for centralized control, and functions of a remaining part or all of the protocol layers are distributed in the DU, and the DU is centrally controlled by the CU.

The terminal in embodiments of the disclosure is an entity, at a user side, for receiving or transmitting a signal, for example, a mobile phone. The terminal may be referred to as a terminal, a user equipment (UE), a mobile station (MS), a mobile terminal (MT), etc. The terminal may be a machine with a communication function, such as a vehicle, a smart vehicle, a mobile phone, an Internet of Things device, a wearable device, a tablet computer (Pad), a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in transportation safety, a wireless terminal in a smart home, etc. A specific technology adopted by the terminal and a specific device form adopted by the terminal are not limited in embodiments of the disclosure.

It may be understood that, the communication system described in embodiments of the disclosure is intended to explain technical solutions of embodiments of the disclosure more clearly, and does not constitute a limitation to the technical solutions provided by embodiments of the disclosure. Those skilled in the art know that, with evolution of a system architecture and emergence of a new business scenario, the technical solutions provided in embodiments of the disclosure are equally applied to similar technical problems.

In addition, the following points are explained to facilitate understanding of the embodiments of the disclosure.

First, in the disclosure, without conflict, each step in any implementation or embodiment may be implemented as an independent embodiment; and steps may be combined arbitrarily. For example, a solution obtained by removing partial steps from an implementation or an embodiment constitutes an independent embodiment; and sequence of steps within an implementation or an embodiment may be exchanged arbitrarily. Optional approaches or examples within an implementation or an embodiment may be combined arbitrarily. In addition, implementations or embodiments may be combined arbitrarily. For example, partial or all steps from different implementations or embodiments may be combined arbitrarily; any implementation or embodiment may be combined with optional approaches or optional examples from other implementations or embodiments.

Second, regarding expressions in the disclosure such as: "A or B", "A and/or B", "at least one of A and B", "in one case A, in another case B", "in response to one case A, in response to another case B", these expressions encompass at least one of the following schemes according to actual circumstances: executing A irrespective of B, i.e., executing Ain some implementations; executing B irrespective of A, i.e., executing B in some implementations; selecting execution from A and B, i.e., selecting execution from A and B in some implementations; or executing both A and B, i.e., executing A and B in some implementations.

Third, each element, row, or column in tables involved in the disclosure may be implemented as an independent embodiment; any combination of elements, rows, or columns may be implemented as an independent embodiment.

Fourth, in some implementations or embodiments, "including A", "containing A", "for indicating A", or "carrying A" in the disclosure may be interpreted as directly carrying A, or may be interpreted as indirectly indicating A.

Fifth, in some implementations or embodiments, expressions such as "in response to...", "in a case that...", "when...", "if...", "in a case of...", etc., in the disclosure may be used interchangeably.

In a scenario where a terminal successfully performs a handover between cells of different RATs, underlying issues after a successful handover may still exist.

If mobility performance cannot be optimized with respect to the issues, subsequent related handover procedures may fail. Thus, how to optimize mobility performance in such a scenario is an urgent problem to be solved. In an embodiment, the terminal may generate an SHR for the network device to optimize the mobility performance of the terminal.

The method and the apparatus for generating an SHR, the device, and the storage medium provided in embodiments of the disclosure are described in detail below with reference to the accompanying drawings.

FIG. 2 is a flow chart illustrating a method for generating an SHR according to an embodiment of the disclosure. The method is performed by a terminal. As shown in FIG. 2, the method for generating the SHR may include the following step 201.

At step 201: a terminal generates the SHR in response to detecting an SHR trigger event, in a case that the terminal successfully completes a handover between cells of different RATs.

Optionally, in an embodiment of the disclosure, cells of different RATs may include at least one of: an NR cell; or an LTE cell.

Optionally, the handover between cells of different RATs may include at least one of: a handover from an NR cell to an LTE cell; or a handover from an LTE cell to an NR cell.

It should be noted that "the handover between cells of different RATs" above may also be referred to as an "inter-RAT handover". It should be understood that the expressions "the handover between cells of different RATs" and "the inter-RAT handover" mentioned in the embodiments of the disclosure are merely example descriptions, and other descriptions having the same or similar meaning as "the handover between cells of different RATs" or "the inter-RAT handover" should also fall within the protection scope of the disclosure.

Optionally, in an embodiment of the disclosure, "successfully completes a handover between cells" above may be understood as: in a case that the terminal receives a random access response message sent by a target network device and the random access response message carries a cell radio network temporary identifier of the target cell, the cell handover is considered successful. Optionally, the expression "in the case that the terminal successfully completes the handover between cells of different RATs" mentioned in the embodiments of the disclosure may refer to a moment where the terminal has just completed the handover between cells of different RATs, or may also refer to a moment after the terminal has completed the handover between cells of different RATs.

Optionally, in an embodiment of the disclosure, "detecting the SHR trigger event" above may be understood as, for example, the terminal detecting that the terminal meets a trigger condition for the SHR. Optionally, in an embodiment of the disclosure, a network device (such as a source network device of the terminal) may send SHR configuration information to the terminal. The SHR configuration information may include a trigger condition for triggering the SHR. Optionally, the trigger condition for the SHR may include a trigger threshold of a specific timer. The specific timer may include at least one of: a timer T304, a timer T310, or a timer T312. The trigger threshold may be understood as, for example: in a case that the running duration of the specific timer reaches the trigger threshold of the specific timer, the terminal is considered as meeting the trigger condition for the SHR. Optionally, the terminal may determine whether to trigger the generation of the SHR based on the trigger condition for the SHR. For example, in a case that the terminal meets the trigger condition for the SHR, it is considered that an SHR trigger event is detected, and the terminal may then generate the SHR. In a case that the terminal does not meet the trigger condition for the SHR, it is considered that no SHR trigger event is detected, and the terminal may not generate the SHR.

Optionally, in an embodiment of the disclosure, the SHR trigger event may be: a trigger event based on a specific timer. Optionally, the SHR trigger event may include at least one of: a trigger event based on a timer T304; a trigger event based on a timer T310; or a trigger event based on a timer T312.

Optionally, in an embodiment of the disclosure, "the trigger event based on the timer T304" may include: a running duration of the timer T304 being greater than or equal to a first threshold, that is, the trigger threshold of the timer T304 is the first threshold. Optionally, in an embodiment of the disclosure, the timer T304 may be started in a case that the terminal receives a reconfiguration message (which may be, for example, a radio resource control (RRC) reconfiguration message sent by a source network device for the terminal). Optionally, after receiving the reconfiguration message, the terminal may perform a cell handover procedure to access the target network device and simultaneously start the timer T304. Optionally, the running duration of the timer T304 may indicate a duration for which the terminal has not accessed the target network device after receiving the RRC reconfiguration message. Optionally, in a case that the running duration of the timer T304 is greater than or equal to a second threshold, it may indicate that a cell handover failure has occurred for the terminal. Optionally, the second threshold is greater than the first threshold.

Optionally, in an embodiment of the disclosure, "the trigger event based on the timer T310" may include: a running duration of the timer T310 being greater than or equal to a third threshold, that is, the trigger threshold of the timer T310 is the third threshold. Optionally, the timer T310 may be started when the terminal detects physical layer problems between the terminal and the source network device. Optionally, during running of the timer T310, if recovery of a radio link of the terminal is detected, the timer T310 may be stopped. Optionally, in a case that the running duration of the timer T310 is greater than or equal to a fourth threshold, a radio link failure of the terminal is determined. Optionally, the fourth threshold is greater than the third threshold.

Optionally, in an embodiment of the disclosure, "the trigger event based on the timer T312" may include: a running duration of the timer T312 being greater than or equal to a fifth threshold, that is, the trigger threshold of the timer T312 is the fifth threshold. Optionally, the timer T312 may be started during running of the timer T310. The timer T312 may be configured to time a radio link failure recovery procedure of the terminal. The running duration of the timer T310 may indicate a duration from a timing where the terminal reports a measurement report (such as a measurement report related to wireless link recovery) to a timing where the radio link of the terminal is recovered (i.e., when the terminal resynchronizes with the network device (such as the source network device)). Optionally, in a case that the running duration of the timer T312 is greater than or equal to a sixth threshold, a radio link failure of the terminal is determined. Optionally, the sixth threshold is greater than the fifth threshold.

As may be seen from the above, the terminal may generate the SHR based on the SHR trigger event above. Optionally, the terminal generates the SHR so that the terminal may subsequently report the generated SHR to the network device. The network device may then obtain an analysis result by analyzing the SHR reported by the terminal and may perform a corresponding processing operation based on the analysis result, thus improving stability of the cell handover of the terminal and/or communication stability of the terminal.

In summary, in the method for generating an SHR provided in embodiments of the disclosure, in the case that the terminal successfully completes the handover between cells of different RATs, the terminal generates the SHR in response to detecting the SHR trigger event. Thus, the disclosure provides the method for generating the SHR for the scenario of "the handover between cells of different RATs performed by the terminal", achieving successful generation and reporting of the SHR during the handover between cells of different RATs.

FIG. 3a is a flow chart illustrating a method for generating an SHR according to an embodiment of the disclosure. The method is performed by a terminal. As shown in FIG. 3a, the method for generating the SHR may include the following step 301a.

At step 301a: in a case that a source cell for the terminal is an LTE cell and a target cell for the terminal is an NR cell, an SHR that does not include a trigger cause of the SHR is generated.

The principle of "generating the SHR that does not include a trigger cause of the SHR" in step 301a is introduced below.

Optionally, as may be seen from the content of the embodiments in FIG. 2, the SHR trigger event may include at least one of: a trigger event based on a timer T304; a trigger event based on a timer T310; or a trigger event based on a timer T312.

For detailed descriptions of the above trigger events, reference may be made to the descriptions in the above embodiments.

Optionally, in an embodiment of the disclosure, a correspondence exists between the SHR trigger event and the trigger cause of the SHR. Optionally, in a case that the terminal generates the SHR due to detecting the "trigger event based on the timer T304", the trigger cause of the SHR is: being triggered by the timer T304; in a case that the terminal generates the SHR due to detecting the "trigger event based on the timer T310", the trigger cause of the SHR is: being triggered by the timer T310; in a case that the terminal generates the SHR due to detecting the "trigger event based on the timer T312", the trigger cause of the SHR is: being triggered by the timer T312.

Based on the above, optionally, in a case that the source cell for the terminal is the LTE cell and the target cell for the terminal is the NR cell, it indicates that the terminal performs handover from the LTE cell to the NR cell. It should be noted that for the handover from the LTE cell to the NR cell, 3GPP introduces the timer T304 as the trigger cause for the SHR. Thus, it may be seen that in the case that the terminal is handed over from the LTE cell to the NR cell, the trigger cause of the SHR is only one, namely: being triggered by the timer T304. That is, in the case that the terminal is handed over from the LTE cell to the NR cell, the SHR is necessarily triggered by the timer T304. Thus, there is no need to additionally include the trigger cause of the SHR in the SHR, saving signaling resource overhead and reducing communication costs.

In summary, in the method for generating an SHR provided in embodiments of the disclosure, in the case that the source cell for the terminal is the LTE cell and the target cell for the terminal is the NR cell, the terminal does not generate the trigger cause of the SHR in the SHR. Thus, the disclosure provides the method for generating an SHR for the scenario of "the handover between cells of different RATs performed by the terminal", achieving successful generation and reporting of the SHR during the handover between cells of different RATs.

FIG. 3b is a flow chart illustrating a method for generating an SHR according to an embodiment of the disclosure. The method is performed by a terminal. As shown in FIG. 3b, the method for generating the SHR may include the following step 301b.

At step 301b: in a case that an SHR trigger event is a trigger event based on a timer T304, an SHR that does not include a trigger cause of the SHR is generated.

For the description of step 301b, reference may be made to the above embodiments.

In summary, in the method for generating an SHR provided in embodiments of the disclosure, in the case that the SHR trigger event is the trigger event based on the timer T304, the SHR that does not include the trigger cause of the SHR is generated. Thus, the disclosure provides the method for generating an SHR for the scenario of "the handover between cells of different RATs performed by the terminal", achieving successful generation and reporting of the SHR during the handover between cells of different RATs.

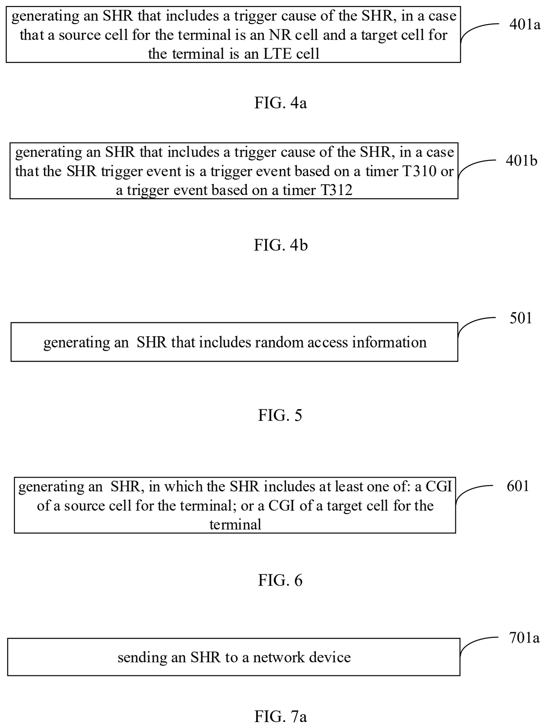

FIG. 4a is a flow chart illustrating a method for generating an SHR according to an embodiment of the disclosure. The method is performed by a terminal. As shown in FIG. 4a, the method for generating the SHR may include the following step 401a.

At step 401a: in a case that a source cell for the terminal is an NR cell and a target cell for the terminal is an LTE cell, an SHR that includes a trigger cause of the SHR is generated.

The principle of "generating an SHR that includes a trigger cause of the SHR" in step 401a is introduced below.

Optionally, as may be seen from the content of the embodiments in FIG. 2, the SHR trigger event may include at least one of: a trigger event based on a timer T304; a trigger event based on a timer T310; or a trigger event based on a timer T312.

For detailed descriptions of the above trigger events, reference may be made to the descriptions in the above embodiments.

Optionally, in an embodiment of the disclosure, a correspondence exists between the SHR trigger event and the trigger cause of the SHR. Optionally, in a case that the terminal generates the SHR due to detecting the "trigger event based on the timer T304", the trigger cause of the SHR is: being triggered by the timer T304; in a case that the terminal generates the SHR due to detecting the "trigger event based on the timer T310", the trigger cause of the SHR is: being triggered by the timer T310; in a case that the terminal generates the SHR due to detecting the "trigger event based on the timer T312", the trigger cause of the SHR is: being triggered by the timer T312.

Based on the above, optionally, in a case that the source cell for the terminal is the NR cell and the target cell for the terminal is the LTE cell, it indicates that the terminal performs handover from the NR cell to the LTE cell. It should be noted that for the handover from the NR cell to the LTE cell, 3GPP introduces the timer T310 or the timer T312 as the trigger cause for the SHR. Thus, it may be seen that in a case that the terminal is handed over from the NR cell to the LTE cell, the trigger cause of the SHR may be: being triggered by the timer T310, or being triggered by the timer T312. Thus, in a case that the terminal is handed over from the NR cell to the LTE cell, the trigger cause of the SHR needs to be included in the SHR to record whether the SHR is triggered by the timer T310 or by the timer T312, so that the network device may subsequently analyze the cause that leads to the cell handover of the terminal based on the trigger cause of the SHR recorded in the SHR reported by the terminal, and perform a corresponding processing operation based on the analyzed cause to avoid frequent cell handovers of the terminal in the future, improving the stability of wireless communication.

In summary, in the method for generating an SHR provided in embodiments of the disclosure, in the case that the source cell for the terminal is the NR cell and the target cell for the terminal is the LTE cell, the SHR that includes the trigger cause of the SHR is generated. Thus, the disclosure provides the method for generating an SHR for the scenario of "the handover between cells of different RATs performed by the terminal", achieving successful generation and reporting of the SHR during the handover between cells of different RATs.

FIG. 4b is a flow chart illustrating a method for generating an SHR according to an embodiment of the disclosure. The method is performed by a terminal. As shown in FIG. 4b, the method for generating the SHR may include the following step 401b.

At step 401b: in a case that the SHR trigger event is a trigger event based on a timer T310 or a trigger event based on a timer T312, an SHR that includes a trigger cause of the SHR is generated.

For the description of step 401b, reference may be made to the above embodiments.

In summary, in the method for generating an SHR provided in embodiments of the disclosure, in the case that the SHR trigger event is the trigger event based on the timer T310 or the trigger event based on the timer T312, the SHR that includes the trigger cause of the SHR is generated. Thus, the disclosure provides the method for generating an SHR for the scenario of "the handover between cells of different RATs performed by the terminal", achieving successful generation and reporting of the SHR during the handover between cells of different RATs.

FIG. 5 is a flow chart illustrating a method for generating an SHR according to an embodiment of the disclosure. The method is performed by a terminal. As shown in FIG. 5, the method for generating the SHR may include the following step 501.

At step 501: an SHR that includes random access information is generated.

Optionally, in an embodiment of the disclosure, the random access information may be random access information when the terminal randomly accesses a target cell during a handover procedure.

Optionally, in an embodiment of the disclosure, the above step 501 may be performed when the terminal successfully completes a handover between cells of different RATs and detects an SHR trigger event.

Optionally, in an embodiment of the disclosure, the random access information included in the SHR may vary under different handover scenarios.

In an embodiment of the disclosure, in a case that the handover scenario is: the terminal hands over from an NR cell to an LTE cell; that is, a source cell for the terminal is an NR cell and a target cell for the terminal is an LTE cell. The random access information in the SHR may include at least one of: a numerical count of transmissions of preamble; first indication information indicating whether contention is detected in a random access; an initial coverage enhancement level used for a random access; or a random access channel (RACH) resource.

Optionally, in an embodiment of the disclosure, the "numerical count of transmissions of preamble" above may be, for example, a total transmission number of the preamble.

Optionally, in an embodiment of the disclosure, the first indication information above may be, for example, an N-bit code, in which N is a positive integer. For example, N may be 1. Optionally, when the first indication information is a first value (such as 1), it may indicate that the terminal detected contention during the random access procedure; when the first indication information is a second value (such as 0), it may indicate that the terminal does not detect contention during the random access procedure.

Optionally, in an embodiment of the disclosure, the initial coverage enhancement level above may be determined by the terminal based on a downlink measurement result when the terminal uses a coverage enhancement mode for random access. Optionally, the downlink measurement result may include a reference signal received power (RSRP).

Optionally, in an embodiment of the disclosure, the RACH resource above may be understood as, for example, a time-frequency domain resource used for transmitting information required during the random access procedure (such as any one or more of msgl-msg4, msgA, or msgB).

In another embodiment of the disclosure, in a case that the handover scenario is: the terminal is hands over from the LTE cell to the NR cell; that is, the source cell for the terminal is the LTE cell and the target cell for the terminal is the NR cell, the random access information in the SHR may include radio access (RA)-information common, in which the RA-information common includes information related to the random access procedure. For example, the RA-information common may include information related to msg1 or information related to msg3. Optionally, the information related to msg1 may include: msg1 -FrequencyStart, msg1 -SubcarrierSpacing, and other information; the information related to msg3 may include: msgA-RO-FrequencyStart, msgA-SubcarrierSpacing, and other information.

Optionally, in an embodiment of the disclosure, when the source cell for the terminal is the LTE cell and the target cell for the terminal is the NR cell, the random access information may be carried in a radio access information common information element (RA-InformationCommon IE).

Optionally, in an embodiment of the disclosure, by including the random access information in the SHR, the terminal enables the network device to subsequently know the random access information of the terminal based on the SHR reported by the terminal. Thus, when the terminal subsequently performs random access to the network device again, the network device may achieve fast random access of the terminal based on the corresponding random access information of the terminal, improving communication efficiency.

In summary, in the method for generating an SHR provided in embodiments of the disclosure, the terminal generates the SHR that includes the random access information during the handover procedure of the terminal. Thus, the disclosure provides the method for generating an SHR for the scenario of "the handover between cells of different RATs performed by the terminal", achieving successful generation and reporting of the SHR during the handover between cells of different RATs.

FIG. 6 is a flow chart illustrating a method for generating an SHR according to an embodiment of the disclosure. The method is performed by a terminal. As shown in FIG. 6, the method for generating the SHR may include the following step 601.

At step 601: an SHR is generated, in which the SHR includes at least one of: a cell global identity (CGI) of a source cell for the terminal; or a CGI of a target cell for the terminal.

Optionally, in an embodiment of the disclosure, the above step 601 may be performed in a case that the terminal successfully completes a handover between cells of different RATs and detects an SHR trigger event.

Optionally, in an embodiment of the disclosure, when the source cell for the terminal or the target cell for the terminal is an LTE cell, the CGI is an LTE CGI; when the source cell for the terminal or the target cell for the terminal is an NR cell, the CGI is an NR CGI.

Optionally, in an embodiment of the disclosure, by including the CGI of the source cell and/or the CGI of the target cell in the SHR, the terminal enables the network device to subsequently know which cell is the source cell and/or the target cell of the terminal based on the SHR reported by the terminal, thus facilitating cell management of the terminal by the network device and improving efficiency and accuracy of cell management.

In summary, in the method for generating an SHR provided in embodiments of the disclosure, the terminal generates the SHR, in which the SHR includes at least one of: the CGI of the source cell for the terminal; or the CGI of the target cell for the terminal. Thus, the disclosure provides the method for generating an SHR for the scenario of "the handover between cells of different RATs performed by the terminal", achieving successful generation and reporting of the SHR during the handover between cells of different RATs.

FIG. 7a is a flow chart illustrating a method for generating an SHR according to an embodiment of the disclosure. The method is performed by a terminal. As shown in FIG. 7a, the method for generating the SHR may include the following step 701a.

At step 701a: an SHR is sent to a network device.

Optionally, in an embodiment of the disclosure, the SHR may be carried in a UE information response message.

Optionally, in an embodiment of the disclosure, sending the SHR to the network device may include: reporting, by the terminal, the SHR to a target network device for the terminal; or reporting, by the terminal, the SHR to a source network device for the terminal; or reporting, by the terminal, the SHR to any other network device.

For a detailed description of step 701a, reference may be made to the descriptions in the above embodiments.

In summary, in the method for generating an SHR provided in embodiments of the disclosure, the terminal reports the generated SHR to the network device. Thus, the disclosure provides the method for generating an SHR for the scenario of "the handover between cells of different RATs performed by the terminal", achieving successful generation and reporting of the SHR during the handover between cells of different RATs.

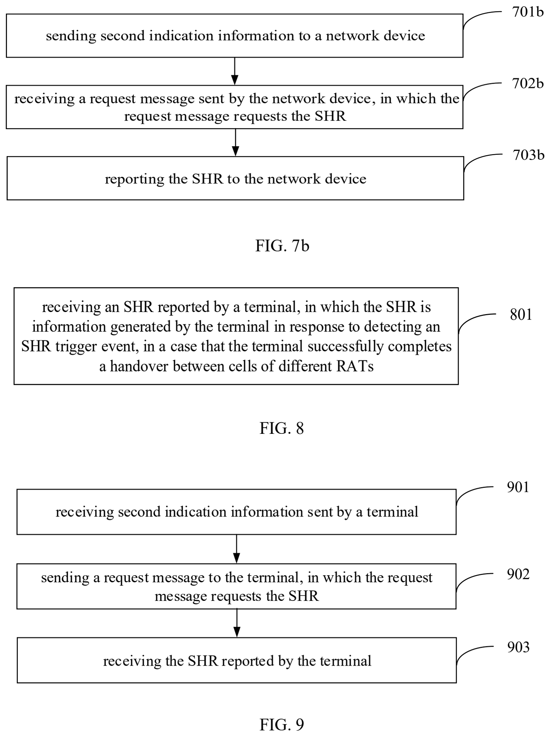

FIG. 7b is a flow chart illustrating a method for generating an SHR according to an embodiment of the disclosure. The method is performed by a terminal. As shown in FIG. 7b, the method for generating the SHR may include the following steps 701b to 703b.

At step 701b: second indication information is sent to a network device.

Optionally, in an embodiment of the disclosure, embodiments of FIG. 7 may be executed after the terminal has successfully generated an SHR corresponding to a handover between cells of different RATs. Optionally, the SHR corresponding to the handover between cells of different RATs may be understood as an SHR recorded and generated for the scenario that "the terminal successfully completes the handover between cells of different RATs".

Optionally, in an embodiment of the disclosure, the second indication information may indicate that the terminal stores the SHR. Optionally, the SHR may be: the SHR corresponding to the handover between cells of different RATs.

Optionally, in an embodiment of the disclosure, "sending the second indication information to the network device" may include: sending, by the terminal, the second indication information to a target network device for the terminal. Optionally, after the target network device for the terminal receives the second indication information, the target network device may further send the second indication information to other network devices, so that the other network devices may know that the terminal stores the SHR, and thus the other network devices may also request the terminal to report the SHR.

Optionally, in an embodiment of the disclosure, the second indication information may be carried in a message to be sent to the network device, in which the message includes at least one of: a connection setup complete message (such as an RRC connection setup complete message), a connection resume complete message (such as an RRC connection resume complete message), a connection reestablishment complete message (such as an RRC connection reestablishment complete message), or a connection reconfiguration complete message (such as an RRC connection reconfiguration complete message).

At step 702b: a request message sent by the network device is received, in which the request message requests the SHR.

Optionally, in an embodiment of the disclosure, the request message may be a UE information request message.

Optionally, in an embodiment of the disclosure, receiving, by the terminal, the request message sent by the network device may include: receiving, by the terminal, the request message sent by the target network device; or receiving, by the terminal, the request message sent by the source network device; or receiving, by the terminal, the request message sent by any other network device.

At step 703b: the SHR is reported to the network device.

Optionally, in an embodiment of the disclosure, the SHR may be carried in a UE information response message.

Optionally, in an embodiment of the disclosure, reporting the SHR to the network device may include: reporting, by the terminal, the SHR to the target network device for the terminal; or reporting, by the terminal, the SHR to the source network device for the terminal; or reporting, by the terminal, the SHR to any other network device.

In summary, in the method for generating an SHR provided in embodiments of the disclosure, the terminal sends the second indication information to the network device, in which the second indication information indicates that the terminal stores the SHR; subsequently, the terminal receives the request message sent by the network device, in which the request message requests the SHR; and the terminal reports the SHR to the network device. Thus, the disclosure provides the method for generating an SHR for the scenario of "the handover between cells of different RATs performed by the terminal", achieving successful generation and reporting of the SHR during the handover between cells of different RATs.

FIG. 8 is a flow chart illustrating a method for generating an SHR according to an embodiment of the disclosure. The method is performed by a network device. As shown in FIG. 8, the method for generating the SHR may include the following step 801.

At step 801: an SHR reported by a terminal is received, in which the SHR is information generated by the terminal in response to detecting an SHR trigger event, in a case that the terminal successfully completes a handover between cells of different RATs.

For a detailed description of step 801, reference may be made to the descriptions in the above embodiments.

In summary, in the method for generating an SHR provided in embodiments of the disclosure, the network device receives the SHR reported by the terminal, in which the SHR is information generated by the terminal in response to detecting the SHR trigger event, in the case that the terminal successfully completes the handover between cells of different RATs. Thus, the disclosure provides the method for generating an SHR for the scenario of "the handover between cells of different RATs performed by the terminal", achieving successful generation and reporting of the SHR during the handover between cells of different RATs.

FIG. 9 is a flow chart illustrating a method for generating an SHR according to an embodiment of the disclosure. The method is performed by a network device. As shown in FIG. 9, the method for generating the SHR may include the following steps 901 to 903.

At step 901: second indication information sent by a terminal is received, in which the second indication information indicates that the terminal stores the SHR.

At step 902: a request message is sent to the terminal, in which the request message requests the SHR.

At step 903: the SHR reported by the terminal is received.

For detailed descriptions of steps 901 to 903, reference may be made to the descriptions in the above embodiments.

In summary, in the method for generating an SHR provided in embodiments of the disclosure, the network device receives the second indication information sent by the terminal, in which the second indication information indicates that the terminal stores the SHR; subsequently, the network device sends the request message to the terminal, in which the request message requests the SHR. Further, the network device further receives the SHR reported by the terminal, in which the SHR is the SHR corresponding to the handover between cells of different RATs. Thus, the disclosure provides the method for generating an SHR for the scenario of "the handover between cells of different RATs performed by the terminal", achieving successful generation and reporting of the SHR during the handover between cells of different RATs.

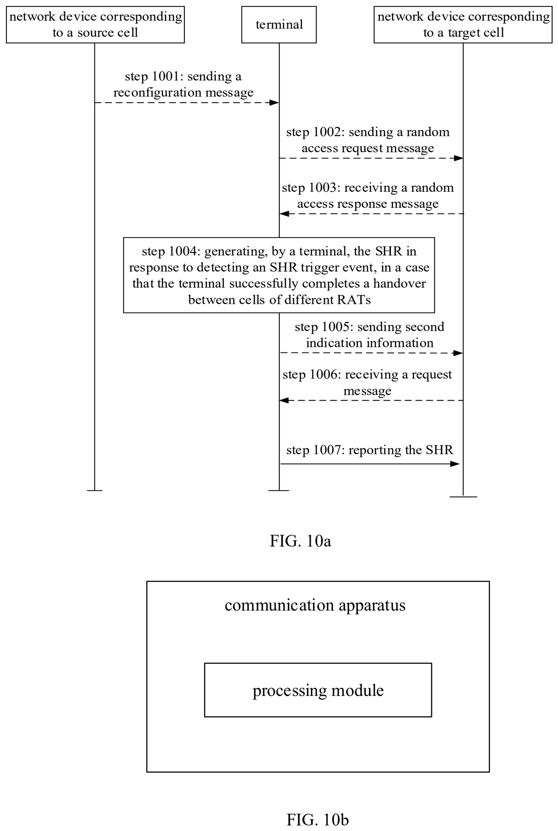

FIG. 10a is a flow chart illustrating an interaction of a method for generating an SHR according to another embodiment of the disclosure. As shown in FIG. 10a, the method for generating the SHR may include the following steps 1001 to 1007.

At step 1001: a terminal receives a reconfiguration message sent by a network device corresponding to a source cell (i.e., a source network device), in which the reconfiguration message may instruct the terminal to hand over to a target cell, and the source cell and the target cell are cells of different RATs.

At step 1002: the terminal sends a random access request message to a network device corresponding to the target cell (i.e., a target network device).

At step 1003: the terminal receives a random access response message sent by the target network device, in which the random access response message carries a cell radio network temporary identifier of the target cell, and the terminal determines that a handover between cells is successfully completed.

Optionally, in an embodiment of the disclosure, the above steps 1001 to 1003 may be executed optionally.

At step 1004: the terminal generates the SHR in response to detecting an SHR trigger event, in a case that the terminal successfully completes a handover between cells of different RATs.

Optionally, the SHR trigger event may include at least one of: a trigger event based on a timer T304; a trigger event based on a timer T310; or a trigger event based on a timer T312.

In a case that the source cell for the terminal is an LTE cell and the target cell for the terminal is an NR cell, the SHR does not include a trigger cause of the SHR.

Optionally, in a case that the SHR trigger event is the trigger event based on the timer T304, the SHR does not include the trigger cause of the SHR.

Optionally, in a case that the source cell for the terminal is the NR cell and the target cell for the terminal is the LTE cell, the SHR includes the trigger cause of the SHR.

Optionally, in a case that the SHR trigger event is the trigger event based on the timer T310 or the trigger event based on the timer T312, the SHR includes the trigger cause of the SHR.

Optionally, the SHR includes random access information in the handover of the terminal.

Optionally, when the source cell for the terminal is the NR cell and the target cell for the terminal is the LTE cell, the random access information includes at least one of: a numerical count of transmissions of preamble; first indication information indicating whether contention is detected in a random access; an initial coverage enhancement level used for a random access; or a RACH resource.

Optionally, when the source cell for the terminal is the LTE cell and the target cell for the terminal is the NR cell, the random access information includes RA-information common.

Optionally, the SHR further includes at least one of: a CGI of the source cell for the terminal; or a CGI of the target cell for the terminal.

Optionally, when the source cell for the terminal or the target cell for the terminal is the LTE cell, the CGI is an LTE CGI; when the source cell for the terminal or the target cell for the terminal is an NR cell, the CGI is an NR CGI.

At step 1005: the terminal sends second indication information to the network device corresponding to the target cell, in which the second indication information indicates that the terminal stores the SHR.

At step 1006: the terminal receives a request message sent by the network device corresponding to the target cell, in which the request message requests the SHR.

At step 1007: the terminal reports the SHR to the network device corresponding to the target cell.

Optionally, the above step 1005 and step 1006 may be executed optionally. For example, after completing step 1004, step 1005 may not be executed, and step 1006 and step 1007 may be executed directly; or after completing step 1004, step 1005 and step 1006 may not be executed, and step 1007 may be executed directly; or after completing step 1004, step 1005 to step 1007 may be executed subsequently.

Further, for detailed descriptions of steps 1001 to 1007, reference may be made to the descriptions in the above embodiments.

In summary, the embodiments of the disclosure provide the method for generating an SHR for the scenario of "the handover between cells of different RATs performed by the terminal", achieving successful generation and reporting of the SHR during the handover between cells of different RATs.

It should be noted that the above implementations or embodiments of the disclosure are not exhaustive, but are merely illustrative of some implementations or embodiments, and shall not be construed as specifically limiting the scope of protection of the disclosure. Without conflict, each step in any implementation or embodiment may be implemented as an independent embodiment; and steps may be combined arbitrarily. For example, a solution obtained by removing partial steps from an implementation or an embodiment constitutes an independent embodiment; and sequence of steps within an implementation or an embodiment may be exchanged arbitrarily. Optional approaches or examples within an implementation or an embodiment may be combined arbitrarily. In addition, implementations or embodiments may be combined arbitrarily. For example, partial or all steps from different implementations or embodiments may be combined arbitrarily; any implementation or embodiment may be combined with optional approaches or optional examples from other implementations or embodiments.

FIG. 10b is a block diagram illustrating a communication apparatus according to an embodiment of the disclosure. As shown in FIG. 10b, the communication apparatus may include a processing module.

The processing module is configured to generate an SHR in response to detecting an SHR trigger event, in a case that a terminal successfully completes a handover between cells of different RATs.

In summary, in the communication apparatus provided in embodiments of the disclosure, in the case that the terminal successfully completes the handover between cells of different RATs, the terminal generates the SHR in response to detecting the SHR trigger event. Thus, the disclosure provides the method for generating an SHR for the scenario of "the handover between cells of different RATs performed by the terminal", achieving successful generation and reporting of the SHR during the handover between cells of different RATs.

Optionally, in an embodiment of the disclosure, the SHR trigger event includes at least one of: a trigger event based on a timer T304; a trigger event based on a timer T310; or a trigger event based on a timer T312.

Optionally, in an embodiment of the disclosure, the handover between cells of different RATs includes at least one of: a handover from a NR cell to an LTE cell; or a handover from an LTE cell to an NR cell.

Optionally, in an embodiment of the disclosure, in a case that a source cell for the terminal is the LTE cell and a target cell for the terminal is the NR cell, the SHR does not include a trigger cause of the SHR.

Optionally, in an embodiment of the disclosure, in a case that the SHR trigger event is the trigger event based on the timer T304, the SHR does not include a trigger cause of the SHR.

Optionally, in an embodiment of the disclosure, in a case that a source cell for the terminal is the NR cell and a target cell for the terminal is the LTE cell, the SHR includes a trigger cause of the SHR.

Optionally, in an embodiment of the disclosure, in a case that the SHR trigger event is the trigger event based on the timer T310 or the trigger event based on the timer T312, the SHR includes a trigger cause of the SHR.

Optionally, in an embodiment of the disclosure, the SHR includes random access information in the handover of the terminal.

Optionally, in an embodiment of the disclosure, when the source cell for the terminal is the NR cell and the target cell for the terminal is the LTE cell, the random access information includes at least one of: a numerical count of transmissions of preamble; first indication information indicating whether contention is detected in a random access; an initial coverage enhancement level used for a random access; or a RACH resource.

Optionally, in an embodiment of the disclosure, when the source cell for the terminal is the LTE cell and the target cell for the terminal is the NR cell, the random access information includes RA-information common.

Optionally, in an embodiment of the disclosure, the SHR further includes at least one of: a CGI of the source cell for the terminal; or a CGI of the target cell for the terminal.

Optionally, in an embodiment of the disclosure, when the source cell for the terminal or the target cell for the terminal is the LTE cell, the CGI is an LTE CGI; when the source cell for the terminal or the target cell for the terminal is an NR cell, the CGI is an NR CGI.

Optionally, in an embodiment of the disclosure, the apparatus is further configured for the terminal to send the SHR to a network device.

Optionally, in an embodiment of the disclosure, the apparatus is further configured for the terminal to send second indication information to a network device, in which the second indication information indicates that the terminal stores the SHR.

Optionally, in an embodiment of the disclosure, the apparatus is further configured for the terminal to receive a request message sent by the network device, in which the request message requests the SHR; and report the SHR to the network device.

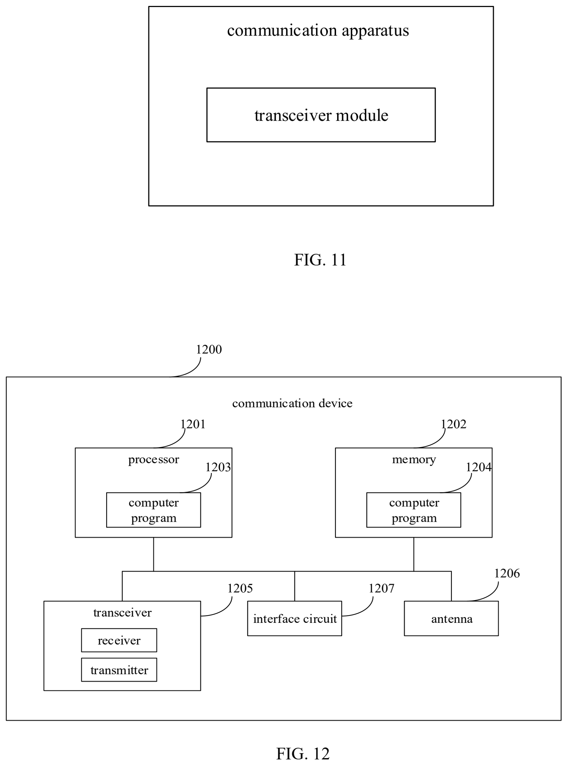

FIG. 11 is a block diagram illustrating a communication apparatus according to an embodiment of the disclosure. As shown in FIG. 11, the communication apparatus may include a transceiver module.

The transceiver module is configured to receive an SHR reported by a terminal, in which the SHR is information generated by the terminal in response to detecting an SHR trigger event, in a case that the terminal successfully completes a handover between cells of different RATs.

In summary, in the communication apparatus provided in embodiments of the disclosure, the network device receives the SHR reported by the terminal, in which the SHR is information generated by the terminal in response to detecting the SHR trigger event, in the case that the terminal successfully completes the handover between cells of different RATs. Thus, the disclosure provides the method for generating an SHR for the scenario of "the handover between cells of different RATs performed by the terminal", achieving successful generation and reporting of the SHR during the handover between cells of different RATs.

Optionally, in an embodiment of the disclosure, the apparatus is further configured for the network device to receive second indication information sent by the terminal, in which the second indication information indicates that the terminal stores the SHR.

Optionally, in an embodiment of the disclosure, the apparatus is further configured for the network device to send a request message to the terminal, in which the request message requests the SHR.

FIG. 12 is a block diagram illustrating a communication device 1200 according to an embodiment of the disclosure. The communication device 1200 may be a base station, a terminal, a chip, a system on chip or a processor that supports the base station to implement the method, or a chip, a system on chip or a processor that supports the terminal to implement the method. The communication device may be configured to implement the method described in the method embodiments, which may refer to descriptions in the method embodiments.

The communication device 1200 may include one or more processors 1201. The processor 1201 may include a general purpose processor or a dedicated processor. For example, the processor may be a baseband processor or a central processor. The baseband processor may be configured to process a communication protocol and communication data, and the central processor may be configured to control a communication device (e.g., a network side device, a baseband chip, a UE, a UE chip, a DU or CU, etc.), to execute a computer program, and process data of the computer program.

Optionally, the communication device 1200 may further include one or more memories 1202 with a computer program stored. The processor 1201 executes the computer program 1204 so that the communication device 12 00 performs the method as described in the above method embodiments. Optionally, the memory 1202 may further store data. The communication device 1200 and the memory 1202 may be independently configured or integrated together.

Optionally, the communication device 1200 may further include a transceiver 1205 and an antenna 1206. The transceiver may be referred to as a transceiving unit, a transceiver or a transceiving circuit, which may be configured to achieve a transceiving function. The transceiver may include a receiver and a transmitter. The receiver may be referred to as a receiver or a receiving circuit, etc., for implementing a receiving function; the transmitter may be referred to as a transmitter or a transmitting circuit, etc. for implementing a transmitting function.

Optionally, the communication device 1200 may further include one or more interface circuits 1207. The interface circuit 1207 is configured to receive code instructions and transmit the code instructions to the processor 1201. The processor 1201 runs the code instructions so that the communication device 1200 performs the method according to the above method embodiment.

In an implementation, the processor 1201 may include a transceiver configured to implement receiving and transmitting functions. For example, the transceiver may be a transceiving circuit, or an interface, or an interface circuit. The transceiving circuit, the interface or the interface circuit configured to implement receiving and transmitting functions may be separate or integrated together. The transceiving circuit, the interface or the interface circuit may be configured to read and write codes/data, or the transceiving circuit, the interface or the interface circuit may be configured to transmit or deliver a signal.

In an implementation, the processor 1201 may be stored with a computer program 1203. The computer program 1203 is running on the processor 1201 so that the communication device 1200 performs the method as described in the above method embodiments. The computer program 1203 may be solidified in the processor 1201, in which case the processor 1201 may be implemented by hardware.

In an implementation, the communication device 1200 may include a circuit that may implement a transmitting or receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe) and gallium arsenide (GaAs).

The communication device described in the above embodiments may be a base station or a terminal, but the scope of the communication device described in the disclosure is not limited, and a structure of the communication device may not be limited in FIG. 12. The communication device may be a stand-alone device or may be a part of a larger device. For example, the communication device may be the following.
(1) a stand-alone integrated circuit (IC), or a chip, or a system on chip or a subsystem;
(2) a set of one or more ICs, optionally, which may also include a storage component for storing data and a computer program;
(3) an ASIC, such as a Modem;
(4) a module that may be embedded within other devices;
(5) a receiver, a terminal device, a smart terminal device, a cellular phone, a wireless device, a handset, a mobile unit, a vehicle device, a network device, a cloud device, an artificial intelligence device, etc.;
(6) others, and so forth.

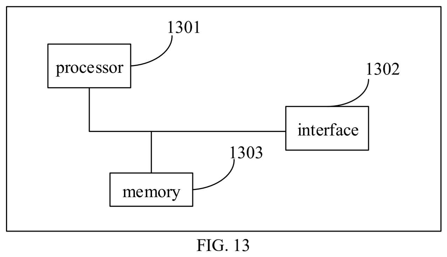

In the case that the communication device may be a chip or a system on chip, reference may be made to the block diagram of the chip shown in FIG. 13. The chip shown in FIG. 13 includes a processor 1301 and an interface 1302. The number of processors 1301 may be one or more and the number of interfaces 1302 may be more than one.

Optionally, the chip further includes a memory 1303, configured to save necessary computer program and data.

Those skilled in the related art may understand that, various illustrative logical blocks and steps listed in embodiments of the disclosure, may be implemented by electronic hardware, computer software or a combination of the electronic hardware and the computer software. Whether the function is implemented by the hardware or the software depends on specific applications and design requirements for an overall system. Those skilled in the art may implement the functions by using various methods for each specific application, but such an implementation should not be understood as beyond the protection scope of embodiments of the disclosure.

A readable storage medium with instructions stored is further provided in the disclosure. When the instructions are executed by a computer, steps in the any one method embodiment are implemented.

A computer program product is further provided in the disclosure. The computer program product implements functions of the above any one method embodiment when executed by a processor.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in disclosure are distinguished merely for convenience of description, and are not intended to limit the scope of embodiments of the disclosure, but also to indicate an order of precedence.

The phase "at least one" in the disclosure may also be described as one or more, and the phase "a plurality of" may refer to two, three, four or more, which is not limited in the disclosure. In embodiments of the disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

Corresponding relationships indicated by tables in the disclosure may be configured or predefined. Values of information in tables are only examples, and may be configured as other values, which are not limited in the disclosure. When corresponding relationships between information and parameters are configured, it is not always necessary to configure all corresponding relationships indicated in tables. For example, in the tables in the disclosure, corresponding relationships indicated by some rows may not be configured. For another example, appropriate transformations and adjustments, such as splitting and merging, may be made based on the above tables. Names of parameters shown in headers in the tables may be other names understandable by the communication apparatus, and values or representations of the parameters may be other values or representations understandable by the communication apparatus. When the above tables are implemented, other data structures may be used, and for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

Those skilled in the related art may realize that, in combination with units and algorithm steps of the examples described in embodiments of the disclosure, may be implemented by an electronic hardware or a combination of an electronic hardware and a computer software. Whether the functions are executed by the hardware or the software depends on a specific application and a design constraint of the technical solution. Those skilled in the art may adopt different methods for each specific application to implement the described functions, but such implementation should not be considered beyond the scope of the disclosure.

Those skilled in the related art may clearly understand that, a specific working process of a system, an apparatus and a unit described above may refer to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the disclosure. Thus, the protection scope of the disclosure shall be subject to the protection scope of claims.

## Claims

1. A method for generating a successful handover report (SHR), comprising:
generating, by a terminal, the SHR in response to detecting an SHR trigger event, in a case that the terminal successfully completes a handover between cells of different radio access types (RATs).

2. The method according to claim 1, wherein the SHR trigger event comprises at least one of:
a trigger event based on a timer T304;
a trigger event based on a timer T310; or
a trigger event based on a timer T312.

3. The method according to claim 1 or claim 2, wherein the handover between cells of different RATs comprises at least one of:
a handover from a new radio (NR) cell to a long term evolution (LTE) cell; or
a handover from an LTE cell to an NR cell.

4. The method according to any one of claims 1 to 3, wherein in a case that a source cell for the terminal is the LTE cell and a target cell for the terminal is the NR cell, the SHR does not comprise a trigger cause of the SHR.

5. The method according to any one of claims 1 to 3, wherein in a case that the SHR trigger event is the trigger event based on the timer T304, the SHR does not comprise a trigger cause of the SHR.

6. The method according to any one of claims 1 to 3, wherein in a case that a source cell for the terminal is the NR cell and a target cell for the terminal is the LTE cell, the SHR comprises a trigger cause of the SHR.

7. The method according to any one of claims 1 to 3, wherein in a case that the SHR trigger event is the trigger event based on the timer T310 or the trigger event based on the timer T312, the SHR comprises a trigger cause of the SHR.

8. The method according to any one of claims 1 to 7, wherein the SHR comprises random access information in the handover of the terminal.

9. The method according to claim 8, wherein when the source cell for the terminal is the NR cell and the target cell for the terminal is the LTE cell, the random access information comprises at least one of:
a numerical count of transmissions of preamble;
first indication information indicating whether contention is detected in a random access;
an initial coverage enhancement level used for a random access; or
a random access channel (RACH) resource.

10. The method according to claim 8, wherein when the source cell for the terminal is the LTE cell and the target cell for the terminal is the NR cell, the random access information comprises radio access (RA)-information common.

11. The method according to any one of claims 1 to 10, wherein the SHR further comprises at least one of:
a cell global identity (CGI) of the source cell for the terminal; or
a CGI of the target cell for the terminal.

12. The method according to claim 11, wherein when the source cell for the terminal or the target cell for the terminal is the LTE cell, the CGI is an LTE CGI; when the source cell for the terminal or the target cell for the terminal is an NR cell, the CGI is an NR CGI.

13. The method according to any one of claims 1 to 12, further comprising:
sending, by the terminal, the SHR to a network device.

14. The method according to any one of claims 1 to 12, further comprising:
sending, by the terminal, second indication information to a network device, wherein the second indication information indicates that the terminal stores the SHR.

15. The method according to any one of claims 1 to 14, further comprising:
receiving, by the terminal, a request message sent by the network device, wherein the request message requests the SHR; and
reporting, by the terminal, the SHR to the network device.

16. A method for generating a successful handover report (SHR), comprising:
receiving, by a network device, an SHR reported by a terminal, wherein the SHR is information generated by the terminal in response to detecting an SHR trigger event, in a case that the terminal successfully completes a handover between cells of different radio access types (RATs).

17. The method according to claim 16, further comprising:
receiving, by the network device, second indication information sent by the terminal, wherein the second indication information indicates that the terminal stores the SHR.

18. The method according to claim 16 or 17, further comprising:
sending, by the network device, a request message to the terminal, wherein the request message requests the SHR.

19. A communication apparatus, comprising:
a processing module, configured to generate a successful handover report (SHR) in response to detecting an SHR trigger event, in a case that a terminal successfully completes a handover between cells of different radio access types (RATs).

20. A communication apparatus, comprising:
a transceiver module, configured to receive a successful handover report (SHR) reported by a terminal, wherein the SHR is information generated by the terminal in response to detecting an SHR trigger event, in a case that the terminal successfully completes a handover between cells of different radio access types (RATs).

21. A communication device, comprising a processor and a memory, wherein the memory stores a computer program that, when executed by the processor, causes the device to perform the method according to any one of claims 1 to 15, or to perform the method according to any one of claims 16 to 18.

22. A communication device, comprising: a processor and an interface circuit; wherein
the interface circuit is configured to receive code instructions and transmit the code instructions to the processor; and
the processor is configured to execute the code instructions to perform the method according to any one of claims 1 to 15, or perform the method according to any one of claims 16 to 18.

23. A computer-readable storage medium, configured to store instructions, wherein when the instructions are executed, the method according to any one of claims 1 to 15 or the method according to any one of claims 16 to 18 is implemented.
